Europäisches Patentamt

European Patent Office

Office européen des brevets

(11) Publication number: **0 440 908 A2**

# EUROPEAN PATENT APPLICATION

(21) Application number: 90122945.0

(22) Date of filing: 30.11.90

(51) Int. Cl.5: **G06F 9/38**, G06F 9/30

The title of the invention has been amended (Guidelines for Examination in the EPO, A-III, 7.3).

(30) Priority: **11.01.90 US 463641**

(43) Date of publication of application:
**14.08.91 Bulletin 91/33**

(84) Designated Contracting States:
**DE FR GB**

(71) Applicant: **International Business Machines Corporation**
**Old Orchard Road**
**Armonk, N.Y. 10504(US)**

(72) Inventor: **Chuang, Chiao-Mei**
**3 Patricia Lane**
**Briarcliff Manor, New York 10510(US)**
Inventor: **Ling, Daniel Tajen**
**25 Amber Drive**
**Croton-on-Hudson, New York 10520(US)**
Inventor: **Matick, Richard Edward**
**14 Lakeview Avenue East**
**Peekskill, New York 10566(US)**

(74) Representative: **Jost, Ottokarl, Dipl.-Ing.**
**IBM Deutschland GmbH Patentwesen und**
**Urheberrecht Schönaicher Strasse 220**
**W-7030 Böblingen(DE)**

(54) A technique for generating an address during an instruction decode cycle in a RISC processor.

(57) Apparatus and accompanying methods, particularly suited for use in conjunction with pipelined instruction processing occurring in a processor of a reduced instruction set computer (RISC), for generating an address during a decode cycle of the instruction processing. Use of this technique substantially eliminates a wait state frequently caused by an address generation cycle that otherwise occurs during pipelined processing of RISC instructions and thereby advantageously increases the processing speed of the RISC processor. In particular, a RISC instruction is both fully decoded and pre-decoded in parallel. The pre-decoding is used to extract the displacement field from the instruction, select a proper base address for the current RISC instruction and, in conjunction with formatting operations, properly align the displacement field — all within the current decode cycle. The base and aligned displacement addresses are then applied to separate inputs of an address adder. The output of the adder is propagated through an address register to an output as a memory address during the decode cycle in the event the full instruction decoding confirms that the current RISC instruction does require an address to be calculated; otherwise, the calculated address produced by the adder during this decode cycle is merely discarded by being over-written during a decode cycle for a subsequent RISC instruction.

FIG. 1

```
                OP CODE  |REG |REG|  DISPLACEMENT
                         | 1  | 2 |      VALUE
      10 ──┐  ┌────────┬────┬────┬──────────────┐
           └──│ STORE  │ R1 │ R2 │      n       │
              └────────┴────┴────┴──────────────┘
                 13       15   17       19

   INSTRUCTION:  STO (R1),(R2)+n      (STORE CONTENTS OF R1
                                      INTO MEMORY AT ADDRESS
                                      SPECIFIED BY CONTENTS
                                      OF R2 + DISPLACEMENT VALUE n)
```

# A TECHNIQUE PARTICULARLY SUITABLE FOR USE IN A RISC PROCESSOR FOR GENERATING AN ADDRESS DURING AN INSTRUCTION DECODE CYCLE

The invention relates to apparatus and accompanying methods, particularly suited for use in conjunction with pipelined instruction processing occurring in a processor of a reduced instruction set computer (RISC), for substantially eliminating a wait state, heretofore frequently caused by an address generation cycle occurring during RISC instruction processing, by generating an address during a decode cycle of this processing.

Historically speaking, most computers have utilized complex instructions. Many single instructions, particularly those used in mainframe computers, typically produced multiple memory accesses and simultaneously operated on multiple, such as two or three, pieces of data. A principal reason underlying the use of complex instructions has been the historically high cost of mass memory, which at one time in the past reached as much as $ 1.50/bit for core memory, and the relatively slow speed at which this memory could be accessed. As a result, an overwhelming need existed in the past to generate increasingly compact machine code. This need was met by the evolution of computer processors that employed instruction sets with increasingly complex instructions. Corresponding instructions from one such set to the next were able to simultaneously invoke an increased number of different operations. Use of such instructions significantly reduced the amount of memory required to store a program and thereby substantially decreased the cost of a computer system required for executing that program. Moreover, by invoking an increased number of memory accesses from one instruction in order to simultaneously obtain multiple pieces of data, the need, which would otherwise occur, to perform a single memory access during successive instruction (machine) cycles to separately obtain each of these pieces of data was significantly reduced thereby ostensibly increasing the speed at which a program would execute. Computer processors that employed such complex instructions became known as so-called "CISC" (complex instruction set computer) processors.

The increasing sophistication of individual instructions required the use of increasingly complex multi-layered instruction decoding. At first blush, one would think that as long as each instruction, regardless of its sophistication, could be fully decoded in a shorter period of time than that required for a memory access — which indeed was the case early in the computer art, little, if any, performance penalty would result in a CISC processor from the use of complex instructions. Unfortunately, as the computer art developed during the ensuing years, this result did not occur due to the nature of compilation. Moreover, this penalty became increasingly problematic as memory technology with substantially decreased access times appeared in the art.

Specifically, compilers have been and are used to translate relatively high level programs into corresponding sequences of instructions (low level machine code) for subsequent execution on a computer. In order to reduce execution speed, compiled machine code should be as efficient as possible, i.e. it should invoke no wasted operations. Each wasted operation unnecessarily consumes processing time and/or computer resources. Unfortunately, in many instances, a compiler that generates CISC machine code often does not generate an efficient sequence of CISC instructions for a given statement in a high level program. This occurs as the result of the nature of CISC instruction sets. Specifically, for many types of algorithms, an efficient sequence of CISC instructions, which takes advantage of the instruction processing pipeline used in a CISC processor, is not possible. This is a direct consequence of the relatively coarse-grained nature of CISC instructions. Fundamentally, each CISC instruction is a combination of two or more simpler RISC-like instructions. However, only certain combinations of these simpler instructions are actually supported by the architecture of a CISC processor. Accordingly, an optimum combination of the simpler RISC-like instructions is not possible in all cases, even with perfect compilers. However, if a finer-grained instruction set, such as that for RISC, is used, a compiler which produces machine code for that instruction set has both an easier job and hence a improved chance of generating a more optimum sequence of operations which are tailored to the specific instruction processing pipeline used in the processor that executes that set than does a compiler that generates CISC machine code.

Furthermore, increasingly fast memories that provided increasingly large storage capacities at substantially decreased costs per bit (now often measured in hundredths or thousandths of a cent), for example semiconductor random access (RAM) memories, have became readily available over the past decade. Currently, memory access times have decreased considerably to the point where such an access can often be performed in one machine cycle. As such, the processing time spent in multi-layered instruction decoding, which might require several machine cycles to accomplish, now presents a significant limitation on instruction processing speed.

Inasmuch as the development and continued evolution of microprocessor instruction sets has historically paralleled that of mainframe computers, complex instruction sets are also currently used in the vast majority of commercially available microprocessors though the reason for doing so, conservation of memory space and cost, has effectively vanished quite some time ago. Accordingly, microcomputer systems suffer the same limitations on processing speed engendered by the use of sophisticated multi-layered instruction decoding as occurs in mainframe computers. With the increasing use of microcomputers to perform sophisticated real-time application processing, such as computer-aided-design and/or engineering tasks or complex numerical analysis or graphics processing, a continuing and growing need exists to increase the processing speed of microcomputer based systems.

With this in mind, the art has recognized that significant improvements in processing speed can be obtained by greatly simplifying the instruction set of a processor. As such, so-called "reduced instruction set computers" (RISC) have been developed in the art. RISC processors utilize a dramatically downsized number of instructions than that employed in a CISC processor. Where a CISC processor may employ two hundred or more different instructions with many of these instructions invoking multiple processing operations, a RISC processor may contain one hundred or less separate instructions in which each RISC instruction invokes only one single operation. The machine code for a program written for a RISC processor usually requires slightly more instructions and hence memory space than does the same program written for a CISC processor; however, available memory space has become much less of an effective limitation on computer design than it was in the past. In particular, by incorporating large capacity relatively inexpensive memories, such as for example those fabricated through use of currently available cost effective 256 Kbit or 1 Mbit RAM circuits, into a microcomputer system, a substantial number of inexpensive memory locations becomes available for program storage. Accordingly, little need, if any, now exists to reduce program size in order to conserve memory locations. Furthermore, fast relatively small optimizing compilers that generate efficient machine code can be more easily written for RISC instructions than for CISC instructions. Moreover, RISC instructions are much simpler to decode than CISC instructions and specifically do not require multi-layered decoding. While a CISC instruction may require several, perhaps as many as three or more, successive machine cycles to fully decode, ideally all instructions in a RISC instruction set should be decodable in only one machine cycle. Accordingly, when both RISC and CISC processors of comparable clock speed are used to execute programs that provide identical functionality, the machine cycles saved in instruction decoding often enable the RISC processor to be much faster than and hence substantially outperform the CISC processor. Thus, any disadvantages, such as additional memory size and cost, caused by the increased size of a RISC program over its CISC counterpart tend to be clearly outweighed by a significant increase in the speed at which that program can be processed by a RISC processor over that provided by a comparable CISC processor.

Given the attractiveness of RISC processors, a drawback nevertheless exists which disadvantageously limits the speed of a RISC processor. In particular, RISC processors employ pipelined instruction processing through which several instructions can be simultaneously processed in a staggered overlapped fashion through the pipeline. The pipeline contains separate stages for instruction decoding, address generation, memory access and register loading. Different instructions simultaneously occupy different stages in the pipeline. While any one RISC instruction may require several machine cycles to completely propagate through the pipeline and be fully processed thereby, a new instruction should ideally enter the pipeline, on the average, at every successive machine cycle. However, before certain RISC instructions can be processed, these instructions require the results of their most recently preceding instruction. But owing to the nature of the pipelined processing, the preceding RISC instruction may not be fully processed and its results made available when a current RISC instruction is ready to be decoded. Accordingly, processing of the current instruction, particularly its instruction decoding, must be delayed, by one and often more machine cycles (through the inclusion of corresponding wait states) until the results of the preceding instruction become available for use. Because, as noted, a new RISC instruction should ideally be processed, on the average, during each successive machine cycle in a RISC processor, even just a one cycle delay (one wait state) that occurs sufficiently frequently in a RISC processor can significantly slow the throughput of that processor. Specifically, those RISC instructions that require such delays encompass branch instructions, both unconditional and conditional, which, on the average, occupy one out of every six instructions that execute on a processor. Accordingly, these wait-state delays can indeed occur sufficiently frequently in a program to adversely impact its processing speed.

Thus a need exists in the art for a technique, particularly suited for use in a RISC processor, for increasing the speed of the processor by reducing the number of wait states that would occur during pipelined processing of RISC instructions. Furthermore, such a technique should be relatively simple and easy to implement.

We have discovered that one of the wait states that occurs quite frequently during pipelined processing of RISC instructions, namely the wait state associated with generating an address during a separate address generation cycle, can be eliminated to advantageously produce a significant increase in RISC processing speed.

Accordingly, the deficiencies inherent in the art and specifically attributable to the occurrence of this one wait state are substantially eliminated in accordance with the teachings of our invention by generating an address, not in a separate address generation cycle, but rather during the decode cycle that occurs within pipelined RISC instruction processing.

To provide a memory address during an instruction decode cycle in accordance with the teachings of our invention, a RISC instruction is both fully decoded and pre-decoded in parallel. The pre-decoding is used to extract the displacement field from the instruction, select a proper base address for the current RISC instruction and, in conjunction with formatting operations, properly align the displacement field — all within the current decode cycle. The base and aligned displacement addresses are then applied to separate inputs of an address adder. The output of the adder is propagated through an address register to an output as a memory address during the decode cycle in the event the full instruction decoding confirms that the current RISC instruction does require an address to be calculated; otherwise, the calculated address produced by the adder during this decode cycle is merely discarded by being over-written during a decode cycle for a subsequent RISC instruction.

In accordance with the specific teachings of our invention, our inventive technique first assumes that an address needs to be generated for any current RISC instruction that initially appears to (might possibly) require a memory address (such as illustratively each LOAD or STORE instruction or each branch instruction) regardless of whether that current instruction, when fully decoded, actually requires such an address to be generated or not. Under this assumption, a pre-decode circuit pre-decodes the operation code (opcode) for the current instruction in order to first extract the displacement address field therefrom, then to format the displacement address field with a proper bit alignment and finally to route the aligned displacement address field to a corresponding input of a binary adder to generate an address. Concurrently, the pre-decode circuit also selects the proper source of the base address for the current RISC instruction, illustratively either the contents of an instruction address register (IAR) in the case of branch type RISC instructions that require memory addresses to be generated or general purpose register RC within the GPR array (the exact register being specified by a field in the current instruction itself) in the case of a load or store (referred to as load/store) type RISC instruction that requires an memory address to be generated. Advantageously, both the base and displacement address fields are processed in parallel and applied to respective multi-bit inputs of the binary adder. In the event the current RISC instruction is one which requires an address to be generated, then after that instruction has been fully decoded, the address generated by the binary adder is simply latched into an address register and therethrough to an output thereof. If, on the other hand, full instruction decoding reveals that the current RISC instruction is one that does not require an address to be generated, then the address that has been produced by the binary adder is not used during the next cycle but is merely overwritten during an instruction decoding cycle for a subsequent RISC instruction. Due to the parallelism occurring in our invention, all the operations needed to generate an address advantageously occur within just one machine cycle. In this manner, the need for a separate address generation cycle along with the wait state associated therewith are both eliminated to advantageously provide an significant increase in the processing speed of a RISC computer.

Furthermore, in accordance with a feature of our invention, since addresses are calculated through use of a separate binary adder rather than through an addition path of an arithmetic logic unit (ALU), these addresses can be calculated in a shorter interval of time, and particular with lessened path delay, than if an ALU were to be used to calculate these addresses.

The teachings of the present invention may be readily understood by considering the following detailed description in conjunction with the accompanying drawings, in which:

FIG. 1 depicts a typical RISC instruction that, as part of its processing, requires an address to be generated;

FIG. 2 depicts the typical multi-cycle processing that occurs in the art for a RISC instruction, specifically a STORE instruction, that requires an address to be generated;

FIG. 3A diagrammatically shows typical multi-cycle timing associated with pipelined RISC instruction processing, that occurs in the art, for processing two illustrative successive RISC instructions where specifically the second instruction requires for its processing the results generated by the first instruction;

FIG. 3B diagrammatically shows a prior art register by-pass operation that is used in conjunction with the pipelined instruction processing shown in FIG. 3A;

FIG. 4 depicts different formats of RISC instructions which require an address to be generated and which exist within a common instruction set executed within an illustrative RISC processor known in the art;

FIG. 5 depicts a high level block diagram of apparatus that embodies the teachings of our present invention for generating an address during a decode cycle of RISC instruction processing;

FIG. 6 depicts the correct alignment of the drawing sheets for FIGs. 6A and 6B;

FIGs. 6A and 6B collectively depict a flowchart of our inventive method for generating an address during a decode cycle when processing those RISC instructions that have the illustrative formats shown in FIG. 4;

FIG. 7 is a logic table that specifies, given actual opcode values, the number of shifts required in aligning an $I_s$ field that occurs in a D short instruction format shown in FIG. 4;

FIG. 8 is a block diagram of combinatorial logic that can be used to implement the table shown in FIG. 7 in order to generate shift bits $S_0$, $S_1$ and $S_2$ used in the flowchart shown in FIGs. 6A and 6B;

FIG. 9 depicts the correct alignment of the drawing sheets for FIGs. 9A - 9D; and

FIGs. 9A - 9D collectively depict a detailed block diagram of the inventive apparatus shown in FIG. 5 that embodies our present invention, and specifically the method shown in FIGs. 6A and 6B, for use in conjunction with processing the illustrative RISC instruction formats shown in FIG. 4.

To facilitate reader understanding, identical reference numerals have been used, where possible, to denote identical elements that are common to the figures.

After reading the following description, those skilled in the art will clearly realize that although our invention is directed to use in a reduced instruction set computer (RISC) processor, our inventive technique could be used in conjunction with instruction processing in many other processors, simple or complex, as well. As such, our inventive technique will be discussed below in the context of use in a RISC processor. Moreover, to facilitate understanding, we will also discuss our invention in conjunction with use within a specific illustrative RISC processor, namely that used within the IBM PC/RT computer ("IBM" is a registered trademark of the International Business Machines Corporation of Armonk, New York which is also the present assignee and which also owns the trademark "PC/RT").

To fully understand the present invention, the following discussion will proceed in three steps. First, we will generally describe how pipelined instruction processing, and specifically address generation, typically occurs within RISC processors known in the art. Thereafter, given the description of pipelined RISC instruction processing that occurs in the art, we will describe the processing delay, specifically involving a wait-state, that frequently results from an address generation cycle that often forms part of this processing. We will then conclude by describing, in detail, our inventive technique for performing address generation during a decode cycle of RISC instruction processing which advantageously eliminates this wait state and substantially increases the processing speed of a RISC processor.

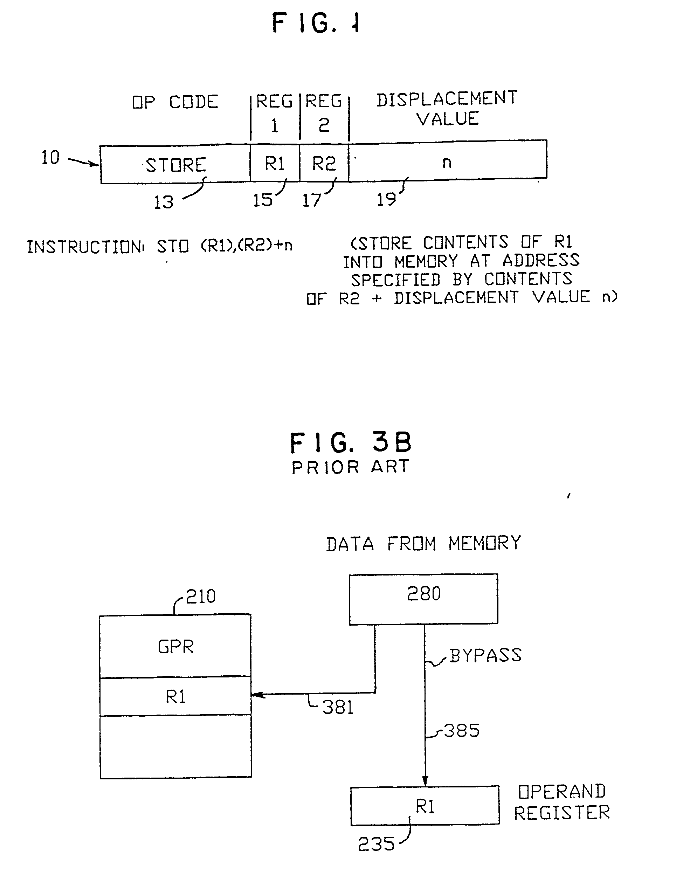

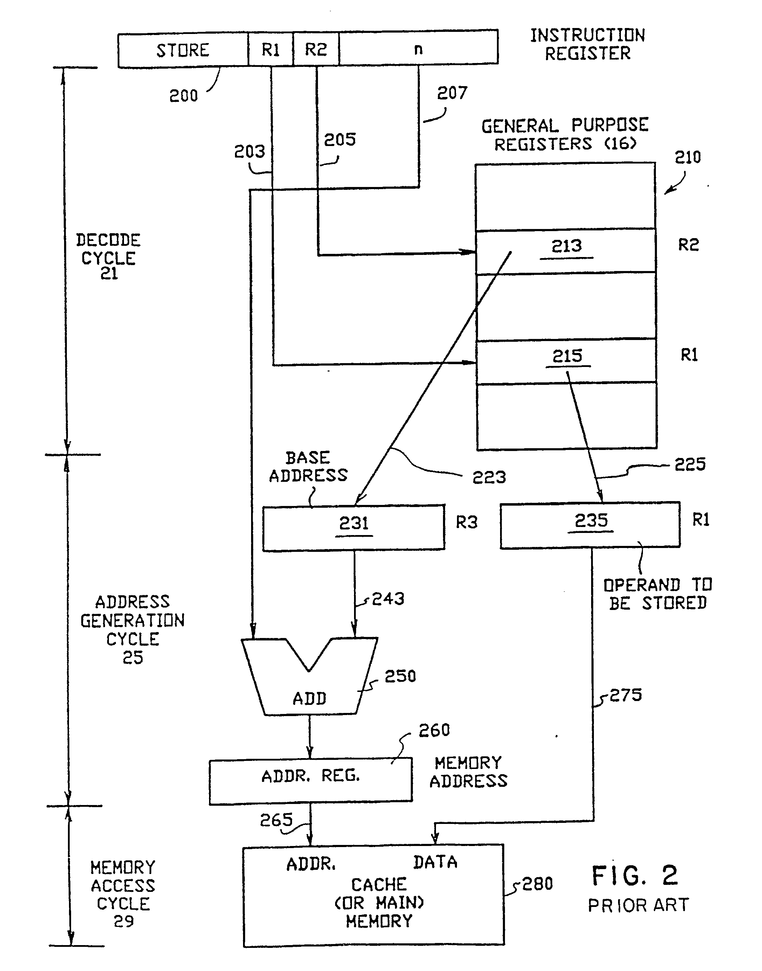

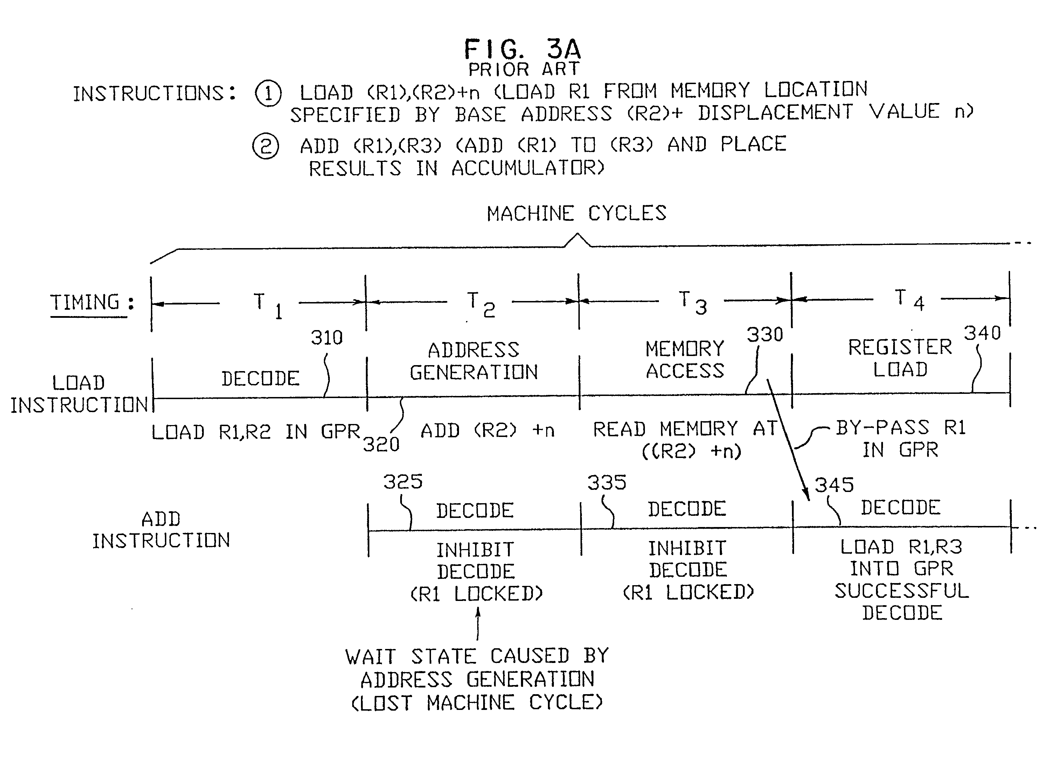

In particular, FIG. 1 depicts a typical RISC instruction 10 that, as part of its processing, requires an address to be generated. This address is typically either a branch address or an address of a memory location at which data is to be written into or read from memory. The address is usually calculated to be the sum of an address displacement value and the current contents of a given register, with the register and the displacement value both specified within the instruction. An illustrative example of instruction 10 is the STORE instruction, STO [R1], [R2] + n, which, when executed, causes the contents of general purpose register R1 to be stored in memory at a memory location given by the sum of the contents of general purpose register R2 (the "base" address) and an address displacement value "n". The displacement value is also commonly referred to as either an index or offset value. As shown in FIG. 1, this RISC instruction contains operation code (opcode) field 13, two register fields 15 and 17 and a displacement field 19. The opcode field contains appropriate bits that specify the particular data processing operation to be invoked by this instruction. Register fields 15 and 17 identify two registers, denoted as R1 and R2, that form part of a group of general purpose registers used during RISC instruction processing. Address displacement field 19 contains address displacement value "n".

In order to properly execute instruction 10, a memory address must be calculated prior to the memory being accessed during the processing of this RISC instruction. It is not the need to calculate this address, which must be met, that is the broad subject of our present invention but rather specifically where and how during multi-cycle pipelined processing of a RISC instruction should an address be calculated in order to increase the processing speed of a RISC processor.

FIG. 2 depicts the typical multi-cycle processing that occurs in the art for a RISC instruction, specifically a STORE instruction shown in FIG. 1, which requires an address to be generated. Instruction processing occurs in a number of processing cycles that collectively spans a succession of consecutive machine cycles. Ideally, each individual processing cycle fully occurs within just one machine cycle. Generally, as is well known in the art, these processing cycles collectively encompass an instruction decoding cycle followed by an address generation cycle, succeeded by a memory access cycle, which, in turn, is followed, in the case of an instruction to store data in a register, by a register load cycle. As such, RISC instructions typically require three or four successive machine cycles, with the number of cycles being governed by the specific instruction.

To begin our discussion, assume that the STORE instruction has been fetched by well known memory access circuitry (not shown) and now resides within instruction register 200. Once instruction processing commences, this instruction is decoded by decode cycle 21. During the decode cycle, the opcode bits of this instruction are decoded which, in turn, causes the contents of register fields R1 and R2 to be loaded, as symbolized by lines 205 and 207, into corresponding registers 213 and 215 situated within general purpose register (GPR) array 210 (hereinafter referred to as GPR 210). GPR 210 illustratively contains sixteen different registers. From the instruction, the base address is loaded into register 213, while the data value to be stored within the memory is loaded within register 215. After these registers are loaded, address generation cycle 25 occurs. During this cycle, the contents of register R1 are loaded, as symbolized by line 225, into operand register 235. Simultaneously therewith, the base address now residing within register R2 in GPR 210 is loaded, as symbolized by line 223, into base address register 231. Once this occurs, the contents of base address register 231 are applied, as symbolized by line 243, as one input to adder 250. The displacement value "n" contained within instruction register 200 is applied, as symbolized by line 207, to the other input of this adder. The arithmetic logic unit (ALU) of the RISC processor is used to perform the add function symbolized by adder 250. Adder 250 performs simple binary addition of the base address and the displacement value to generate a memory address. At the conclusion of the address generation cycle, the address produced by adder 250 is loaded into address register 260. Once this address has been loaded into the address register, instruction processing continues with memory access cycle 29. During this cycle, the address contained within address register 260 is applied, as symbolized by line 265, to an address input of memory 280 which is usually cache or main memory. Concurrently with the application of the address to memory 280, the data value is applied, as symbolized by line 275, to the data input of memory 280. Once the address and data values are applied to the memory, the memory undertakes a write operation to store the data value therein. After the memory write operation concludes, the STORE instruction has been fully processed and processing for next RISC instruction, which by now resides within instruction register 200, commences. In the event that the RISC instruction is a LOAD instruction (not shown), rather than a STORE instruction, which requires an address to be generated, such as the contents of a memory location specified by the sum of the contents of register R2 and a displacement value, followed by the loading the contents of this memory location into specified register R1, then memory access cycle 29 would perform a memory read rather than memory write operation and would itself be succeeded by a register load cycle (also not shown). During this register load cycle, the contents of the addressed location in memory 280 would be written into specified general purpose register R1. Similar address calculations and multi-cycle instruction processing would also occur during processing of RISC branch instructions.

To increase processing speed, RISC processors known in the art employ pipelined instruction processing through which several RISC instructions are simultaneously processed in a staggered overlapped fashion through a pipeline. The pipeline contains a separate hardware stage for each different instruction processing cycle: an instruction decoding stage, an address generation stage, a memory access stage and a register loading stage. Because of this pipelined architecture, different RISC instructions can simultaneously occupy different stages in the pipeline. While any one RISC instruction may require several machine cycles to completely propagate through the pipeline and be fully processed thereby, after a well-known multi-cycle (typically two cycle) start-up delay for the RISC pipeline instruction processor has occurred, a new instruction should ideally enter the pipeline, on the average, at every successive machine cycle. This goal of one new RISC instruction on the average per each machine cycle can be met as long as successive instructions are independent of each other, i.e. a succeeding instruction does not require the results from a recently preceding instruction to be fully processed. In this case, the results for any one instruction at any stage of the pipeline would not affect the processing of other instructions at any other stage of the pipeline. Consequently, the decoding, address generation and memory access and where appropriate, register loading, cycles would simultaneously occur in parallel for different RISC instructions at various stages in the pipeline.

Unfortunately, many RISC instructions that are currently ready for processing often require the result of their most recently preceding instructions before processing can occur. Conditional branches form one illustrative group of these instructions. The conditional nature of these instructions necessitates that the results of a prior instruction, which determine whether a condition will be satisfied or not, must be available before a corresponding conditional branch instruction can be fully processed and specifically before a proper branch address can be calculated. Accordingly, processing of the current instruction, particularly its instruction decoding, must be delayed, by one and often more machine cycles until the results of the preceding instruction become available for use. In addition, apart from conditional branches, a non-branch instruction that involves one of the general purpose registers, such as an ADD for adding the contents of two general purpose registers together, may be preceded by an instruction, such as a LOAD, that affects the contents of one of these registers. The add operation can not proceed until this one register is loaded with the proper contents. As a result, where such instructions occur, processing of a succeeding instruction is halted, by the insertion of an appropriate number of wait states, until the processing of its preceding instruction is completed. Disadvantageously, these wait-state delays, if sufficiently frequent, can significantly slow program execution on a RISC processor.

These wait state delays are diagrammatically shown in FIG. 3A. Specifically, FIG. 3A diagrammatically shows typical multi-cycle timing associated with pipelined RISC instruction processing, that occurs in the art, for processing two illustrative successive RISC instructions where a first instruction alters the contents of a register and these contents are to be used by a second instruction. Here, the first instruction is illustratively a LOAD instruction, specifically LOAD [R1], [R2] +n, that loads general purpose register R1 with a value stored in memory and at a location specified by the sum of the contents of register R2 and displacement value "n". This instruction is followed by illustratively an add instruction, specifically ADD [R1], [R3], which adds the contents of general purpose registers R1 and R3 and places the results in an accumulator.

With pipelined RISC instruction processing, the LOAD instruction enters the decoding stage of the pipeline with its decoding then occurring during machine cycle T1. During this cycle, the LOAD instruction decoding cycle symbolized by line 310 occurs. Specifically, the opcode of the LOAD instruction is decoded and the contents of general purpose registers R1 and R3 are appropriately accessed using address values contained within the instruction. During the next machine cycle, i.e. cycle $T_2$, LOAD instruction processing passes to the address generation stage of the pipeline at which the LOAD instruction address generation cycle, as symbolized by line 320, occurs. During this stage, the contents of general purpose register R2 and displacement value "n" are added to form a memory address. Thereafter, during machine cycle $T_3$, LOAD instruction processing passes to the memory access stage of the pipeline during which the LOAD instruction memory access cycle, as symbolized by line 330, is undertaken to access an addressed memory location. Instruction processing would then proceed to a register load stage, which during machine cycle $T_4$, would ordinarily cause the LOAD instruction register load cycle, as symbolized by line 340, to occur in order to load the contents of the accessed memory location into general purpose register R1.

As noted, successive RISC instructions should enter the instruction processing pipeline during successive machine cycles. Hence, processing of the ADD instruction should ideally be overlapped with and temporarily offset by just one machine cycle from the start of the RISC instruction processing for the LOAD instruction. Accordingly, during machine cycle $T_2$, the ADD instruction is applied to the decoding stage. Unfortunately, the ADD instruction requires the contents of general purpose register R1 which, unfortunately, during this cycle has not yet been loaded by execution of the preceding LOAD instruction. Inasmuch as this register is locked during machine cycle $T_2$ by execution of the LOAD instruction, no other instruction can utilize this register at this time. As such, while decoding of the ADD instruction is attempted during machine cycle $T_2$, this decoding is effectively inhibited during this cycle resulting in a one cycle wait state, symbolized by line 325, being inserted into the processing of the ADD instruction. Inasmuch as register R1 also remains locked during machine cycle $T_3$ since it has not yet been filled by the concurrent processing of the LOAD instruction, another wait state, here symbolized by line 335, is inserted into the ADD instruction processing. To eliminate the need to include yet another wait state in the processing of the ADD instruction to fill machine cycle $T_4$ during which general purpose register R1 would be loaded from memory during the LOAD instruction and then subsequently read out into an operand register during decoding of the ADD instruction, a well known register by-pass operation is performed. In this case and specifically as shown in FIG. 3B, data from the addressed location in memory 280 is written into general purpose register R1, as symbolized by line 381, and, also, as symbolized by line 385, simultaneously into operand register 235. As a result, decoding of the ADD instruction occurs during machine cycle $T_4$, as symbolized by line 345 shown in FIG. 3A, rather than during the next machine cycle, T5 (not shown).

To maintain tight pipelined instruction processing within the RISC processor, GPR 210 is required to permit two of the registers within the GPR array to be simultaneously read while at the same time two other registers within this array are being simultaneously written, for a total of four simultaneously occurring register operations. Such a GPR array with this degree of parallelism tends to be disadvantageously complex and expensive, in terms of circuitry area, power required, and processing speed, to implement.

More importantly, as can be seen from FIG. 3A, the need to generate an address and then access memory during processing of the LOAD instruction injected a two cycle delay in the pipelined processing of the ADD instruction. Similar processing delays, due to register locks and decoding cycle inhibition, occur in processing other RISC instructions that require the results generated by processing immediately preceding RISC instructions.

While instruction decoding and memory access cycles need to be sequentially performed for any one RISC instruction, we have recognized, in accordance with the teachings of our broad invention, that in the context of RISC processors, an address could be generated during the address decoding cycle in order to eliminate the wait state heretofore caused by the use of a separate address generation cycle in a RISC processor. By eliminating a separate address decoding cycle and this attendant wait state, the speed and hence throughout of a RISC processor are both advantageously likely to substantially increase. We found that several other advantages also result from performing address generation during the decode cycle. Specifically, the interlock circuitry heretofore needed to insert the wait state during the address generation cycle is no longer necessary thereby resulting in simplified pipeline control circuitry — in terms of reduced circuit complexity and reduced size and power requirements. Furthermore, the GPR array is only required to be able to simultaneously undertake 2 read operations and 1 write operation rather than 2 read operations and 2 write operations, thereby also simplifying the GPR — again in terms of reduced circuit complexity and reduced size and power requirements. In addition, whenever a LOAD or STORE (after being decoded) instruction occurs while an instruction prefetch buffer is empty, the LOAD or STORE instruction takes precedence, but with only a loss of 1 machine cycle instead of 2 cycles as would occur through use of a separate address generation cycle.

In accordance with the specific teachings of our invention, our inventive technique first assumes that an address needs to be generated during each LOAD or STORE instruction or each branch instruction. Under this assumption, address generation is performed during the decode cycle by a pre-decode circuit that pre-decodes the opcode for each of these instructions to first extract the displacement address field therefrom, then to format the displacement address field into a proper bit alignment and finally to route the aligned displacement address field to a corresponding input of a separate binary adder, rather than the ALU, to generate an address. Concurrently, the pre-decode circuit also selects the proper source of the base address for the current RISC instruction: either the contents of an instruction address register (IAR) in the case of branch type RISC instructions that require memory addresses to be generated or a general purpose register RC within the GPR array (as specified by the current instruction itself) in the case of a load or store (collectively referred to herein as load/store) type RISC instruction that requires an memory address to be generated. Advantageously, both the base and displacement address fields are processed in parallel and applied to respective multi-bit inputs of the binary adder. In the event a current instruction is one which requires an address to be generated, then after that instruction has been fully decoded, the address generated by the binary adder is simply latched into an address register and therethrough to an output thereof. If, on the other hand, full instruction decoding reveals that the current instruction is one, such as an unconditional branch with an absolute address in the instruction register or directly in the GPR, that does not require an address to be generated, then the address that has been produced by the binary adder is not used on the next cycle but is merely overwritten during a instruction decoding cycle for a subsequent RISC instruction. Due to the parallelism occurring in our invention, all the operations needed to generate an address advantageously occur within just one machine cycle.

Moreover, a separate binary adder is simpler and significantly faster than the adder portion of an ALU. Consequently, use of such an adder, rather than an ALU in a RISC processor (as well as a serially connected bit formatter) as occurs in the art, to generate an address further increases the speed at which an address can be generated.

Moreover, since the output of the binary adder only feeds the address register, this adder has a relatively small load to drive. By contrast, if the ALU were to drive the address register, the ALU would experience a larger load inasmuch as its output is routed to numerous locations, including the GPR array, the address register and elsewhere. Consequently, the path delay associated with use of a separate binary address adder is advantageously likely to be significantly shorter than that associated with use of the ALU as an address adder.

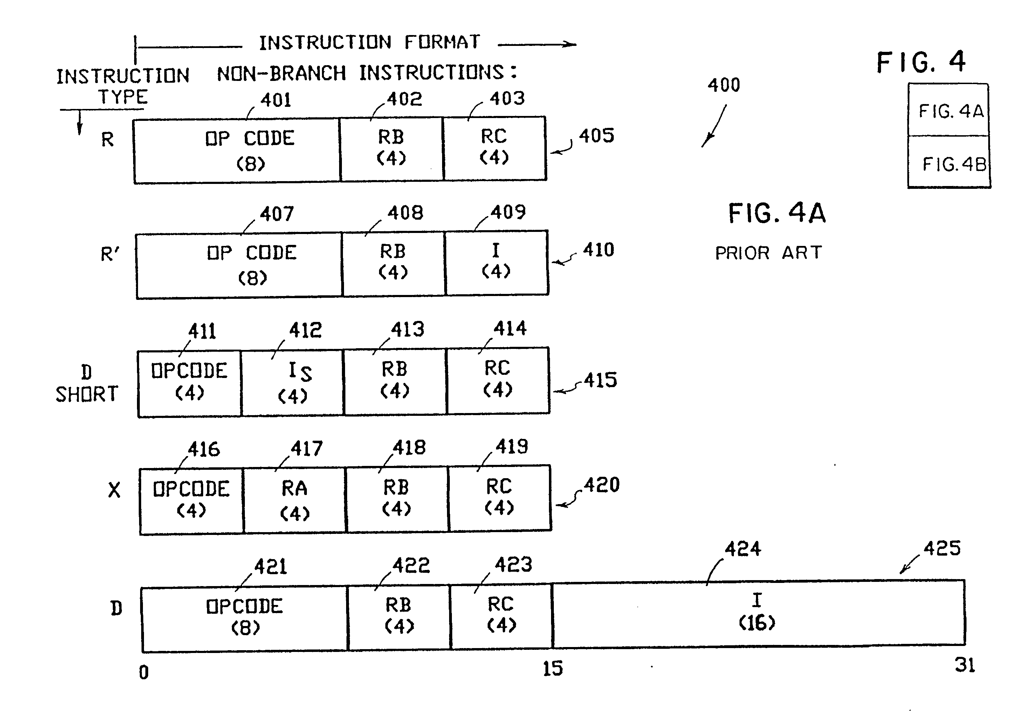

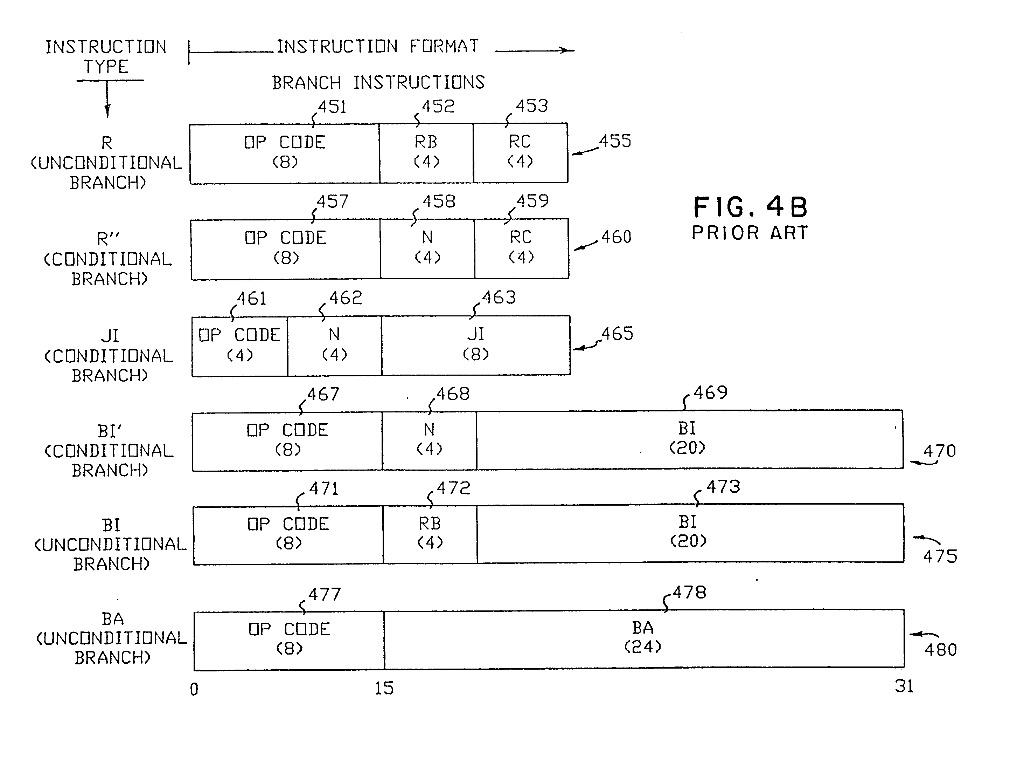

To fully understand our inventive technique for generating an address during a decode cycle of pipelined RISC instruction processing, we will now explain the use of our technique in conjunction with an instruction set executed within illustratively the RISC processor used in the IBM PC/RT computer, as noted above, and specifically for the formats of the various instructions in this set that require an address to be generated. FIG. 4 specifically depicts these different RISC instruction formats for the IBM PC/RT instruction set.

As shown, IBM PC/RT RISC instruction formats 400 that require an address to be generated encompass both non-branch and branch instructions. With respect to the non-branch instructions, these instruction formats include: R type instruction format 405 that contains eight-bit opcode field 401 and four-bit operand (RB) and base address (RC) register fields 402 and 403, respectively; R' type instruction format 410 that contains eight-bit opcode field 407 followed by four-bit operand register and four-bit increment (I) fields 408 and 409, respectively; D Short type instruction format 415 that contains four-bit opcode field 411, four-bit (short) increment ($I_s$) field 412, four-bit operand and four-bit base register fields 413 and 414, respectively; X type instruction format 420 that contains four-bit opcode field 416, four-bit result (RA) register field 417, four-bit operand and four-bit base register fields 418 and 419; and D type instruction format 425 that contains eight-bit opcode field 421, four-bit operand and base register fields 422 and 423, respectively, and sixteen-bit increment field increment field 424. The formats for the branch instruction encompass: R type (unconditional branch) format 455 that contains eight-bit opcode field 451 followed by four-bit operand and base address register fields 452 and 453; R" type (conditional branch) format 460 that contains eight-bit opcode field 457, followed by four-bit condition bit number (N) field and four-bit base register field 459; JI type (conditional branch) format 465 that contains four-bit opcode field 461 followed by four-bit condition bit number field 462 and eight-bit jump immediate (JI) address field 463; BI' type (conditional branch) format 470 that contains eight-bit opcode field 467, four-bit condition bit number field 468 and twenty-bit branch immediate (BI) address field 469; BI type (unconditional branch) format 475 that contains eight-bit opcode field 471, four-bit operand register field 472 and twenty-bit branch immediate (BI) address field 473; and, lastly, BA type (unconditional branch) format 480 that contains eight-bit opcode field 477 followed by a twenty-four bit absolute branch address (BA) field 478.

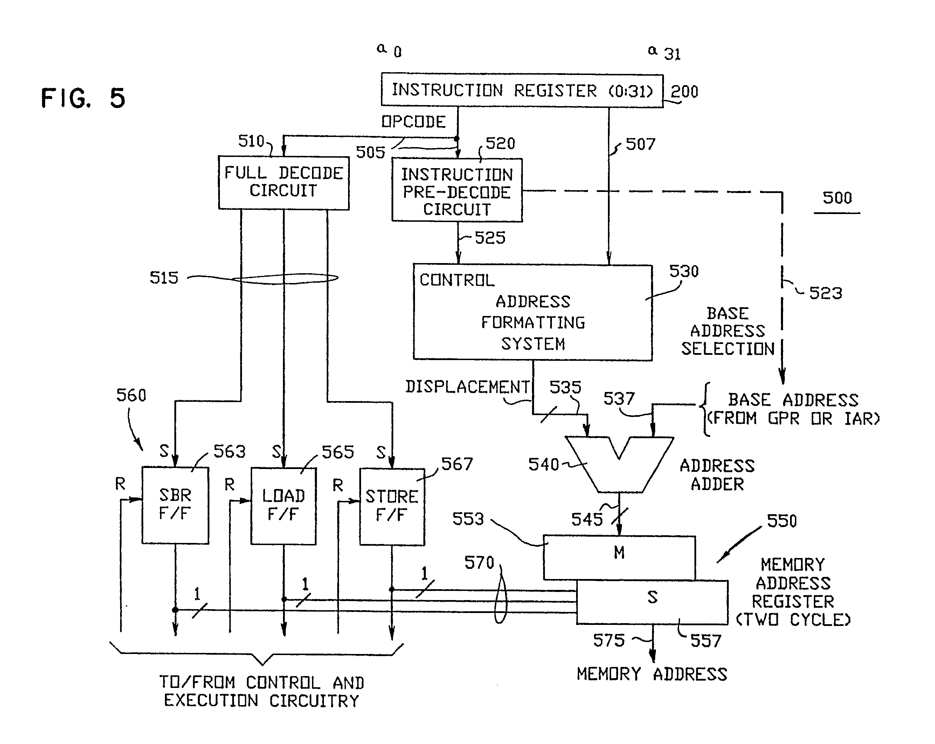

FIG. 5 depicts a high level block diagram of apparatus that embodies the teachings of our present invention for generating an address during a decode cycle of RISC instruction processing for illustratively any thirty-two bit RISC instruction. Specifically, as shown, a current RISC instruction to be processed is stored in thirty-two bit form, as bits $a_0$, ..., $a_{31}$, in instruction register 200. At the inception of the decode cycle, the opcode of the instruction is routed in parallel, via leads 505, as input to both full decode circuit 510 and instruction pre-decode circuit 520. Full decode circuit 510, which is well known and formed through combinatorial logic, fully decodes the instruction and, based upon the decoded opcode and the instruction type, provides a pulse on a corresponding one of the leads within leads 515. Leads 515 are connected to the set input of a succession of flip-flops (one bit latches) 560. Each flip-flop is set to a one state if a pulse appears on its corresponding set input. Specifically, flip-flop 563 is set if the decoded instruction is a successful branch (SBR) instruction, i.e. an unconditional branch or a conditional branch in which the condition has been satisfied, and flip-flop 565 or 567 is set if the decoded instruction is a load/store instruction, respectively. Additional flip-flops (not shown) would exist within flip-flops 560 to accommodate all the other types of RISC instructions being fully decoded and executed. The outputs of flip-flips 560 are collectively routed to well-known control and instruction execution circuitry (not specifically shown). In addition, the outputs of the individual flip-flops associated with instruction types that require address generation are routed, via leads 570, to provide separate enable signals, which will be discussed in detail below, to memory address register 550. After the current instruction has been fully executed, the control and execution circuitry resets the corresponding flip-flop within flip-flops 560 to a zero state.

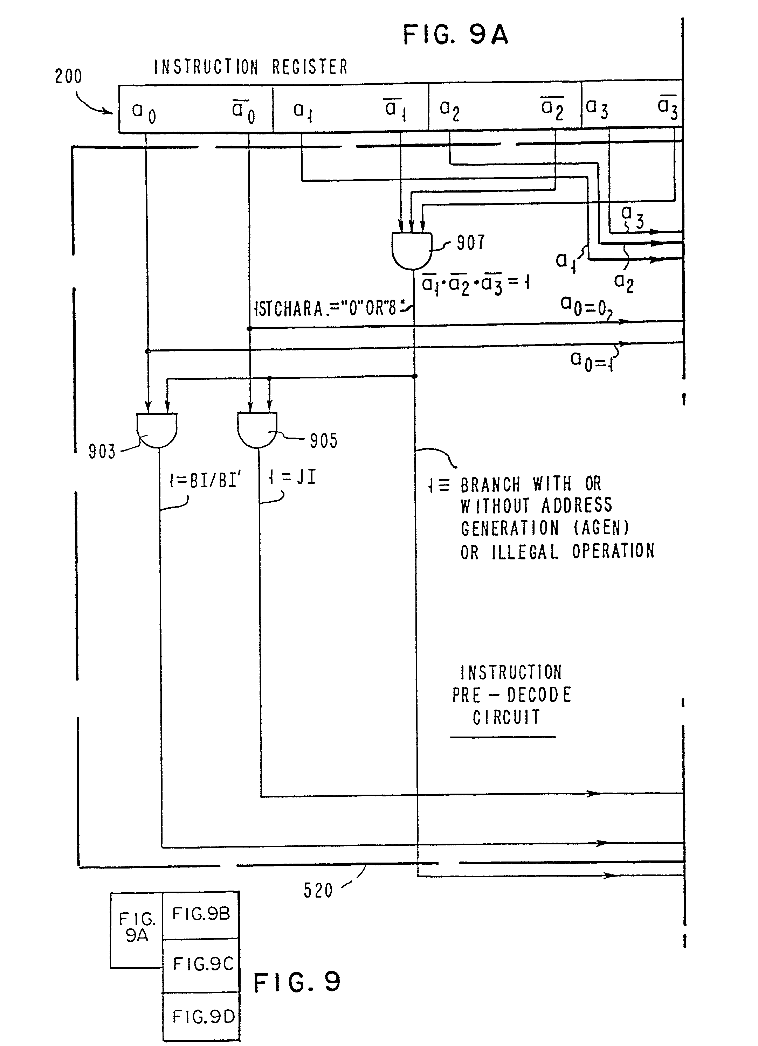

In parallel with the full decode operation performed by circuit 510, instruction pre-decode circuit 520 first determines whether the opcode of the current instruction matches any of the opcodes for those instruction formats that could require an address to be generated, such as illustratively for load, store or branch type instructions. Instruction pre-decode circuit 520 is implemented using simple combinatorial logic readily apparent to those skilled in the art and illustratively shown in FIGs. 9A - 9D and discussed in detail below. In the event the current instruction is one for which an address might be needed, pre-decode circuit 520, as shown in FIG. 5, generates an appropriate control signal on leads 525 to address formatting circuit 530. Circuit 530 is supplied with the current instruction, via leads 507, from instruction register 200. Circuit 530 contains a combinatorial multiplexor which is well known in the art for performing multi-bit parallel demultiplexing and shifting operations on incoming data. Here, the address formatting circuit, in response to the control signals appearing on leads 525, parses the displacement address field from the current instruction and appropriately aligns the bits of the displacement field contained therein, including using sign extension when required, such that the displacement address fields from all instruction types that generally require address generation are applied with proper bit positioning, over leads 535, to a common thirty-bit input of address adder 540. This adder is implemented as a simple thirty-two bit binary adder separate from the addition path in an arithmetic logic unit that is used in the RISC processor. Concurrent with the application of the displacement address to leads 535, the base address is applied over leads 537 to the other thirty-two bit input of adder 540. The base address originates either from a general purpose register or through an instruction address register (IAR) (contained within the RISC processor and well known and not specifically shown) as selected by instruction pre-decode circuit 520 — this selection operation being symbolized by dashed line 523. Adder 540 forms the sum of the base and displacement addresses and applied the results over leads 545 in parallel to the data input of memory address register 550. Address register 550 is implemented as a two-cycle register having master portion 553 and slave portion 557. Incoming address information is loaded, via leads 545, into the master portion but is transferred from the master to the slave portion only in the event an enable signal is applied to the slave portion. These enable signals appear on leads 570. As such, if the address produced by adder 540 is for an instruction, which, as revealed by full decoding, requires an address to be generated, then a suitable enable pulse appears on one of leads 570 slightly after the address has been loaded into master portion 553. This enable pulse cause the address to be transferred into slave portion 557 and, from there, onto output leads 575 as the memory address. Alternatively, if the current instruction, as revealed by its full decoding, is one which does not require that an address be generated, then no such enable pulse appears on leads 570. As such, the calculated address that has just been loaded into master portion 553 is simply overwritten during the decoding of a subsequent RISC instruction and does not appear on memory address output leads 575. This process of generating an address and overwriting it within register 550, when that address is not needed, continues for each subsequent RISC instruction that is initially and generally assumed to require that an address be generated. All the processing occurring in circuit 500 including the application of a calculated address to output leads 575 advantageously occurs during the instruction decoding cycle.

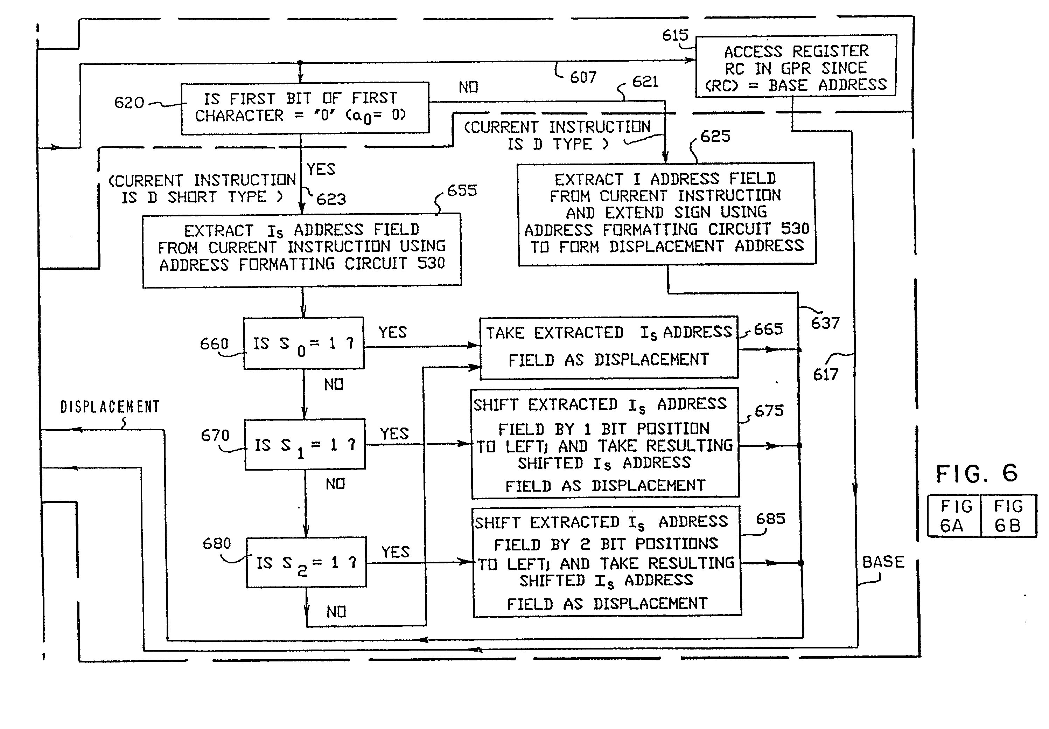

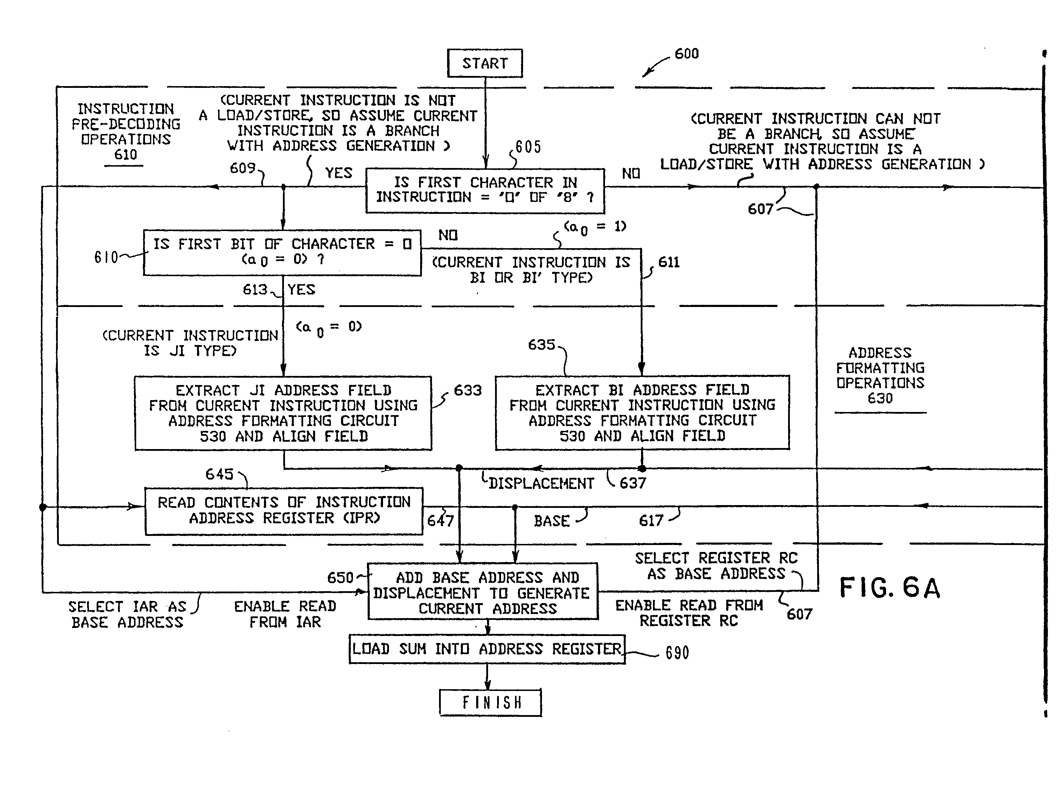

Now, with the foregoing general description of our inventive technique in mind, FIGs. 6A and 6B collectively depict a flowchart of our inventive method 600 for generating an address during a decode cycle when processing those RISC instructions that have the illustrative formats shown in FIG. 4, i.e. the specific formats of the RISC instructions executed on the IBM PC/RT computer. FIG. 6 depicts the correct alignment of the drawing sheets for FIGs. 6A and 6B. To simplify the flowchart and its accompanying discussion, the steps associated with full decode circuit 510 and flip flops 560 (see FIG. 5), namely full instruction decoding, generation of address register enable signals and selective transfer of an address through the address register, all as discussed above, which form part of the inventive method have nevertheless been omitted from FIGs. 6A and 6B and the accompanying discussion thereof.

As shown, method 600 contains instruction pre-decoding operations 610 and address formatting operations 630 followed by address calculation step 650 and address loading step 690. Upon the start of instruction processing by method 600, execution first proceeds to decision step 605. This decision step determines from the contents of the first character in the opcode of the current instruction whether the current instruction is of a format associated with a load/store instruction that might possibly require an address to be generated or is of a format associated with a branch instruction that might possibly require an address to be generated. In the event that the first character equals either of the values "0" or "8", then the instruction is one of a format associated with branch instructions that might possibly require an address to be generated. As such, execution proceeds in parallel, via paths 609, to decision step 610 and step 645 and to step 650. Decision step 610 determines, based upon the value of the first bit of the first character in the opcode, the type of branch instruction that is currently being pre-decoded, i.e. whether that instruction is a BI or BI' type or a JI type. At the same time, the contents currently stored in the instruction address register [IAR) are selected as the base address through generation of a suitable enable to step 650. As a result, the base address is read from the IAR, as indicated by step 645 and applied as the base address, over path 647, to one (base) address input to add step 650.

Based upon the type of the branch instruction, execution proceeds either via path 613 (if bit $a_0$ = "0") for a JI type branch instruction to step 633 or via path 611 (if bit $a_0$ = "1") for a BI or BI' type branch instructions to step 635. Step 633, when performed, extracts and properly aligns the JI address field from the current instruction using address formatting circuit 530 (see FIG. 5). Alternatively, step 635 (see FIGs. 6A and 6B), when performed, extracts and properly aligns the BI address field from the current instruction using address formatting circuit 530 (see FIG. 5). The extracted and aligned address field is then applied, via path 637 as shown in FIGs. 6A and 6B, as the displacement address to a second (displacement) address input to add step 650. Add step 650 then adds the base and displacement addresses together and generates a resulting address which, upon subsequent execution of step 690, is loaded into a suitable address register for use in the memory access cycle of processing the current RISC instruction. Once step 690 is performed, method 600 has been completed for this instruction.

If, alternatively, the current instruction being pre-decoded does not have a branch type instruction format but instead has a format associated with either a load/store instruction that might possibly require an address to be generated, then execution proceeds via NO paths 607 in parallel to step 650, decision step 620 and step 615. As such, the contents currently stored in general purpose register RC, rather than the instruction address register, are selected as the base address through generation of a suitable enable to step 650. As a result, the base address is read from register RC, as indicated by step 615, and is applied as the base address over path 617 to the base address input to add step 650.

Decision step 620 determines, based upon the value of the first bit of the first character in the opcode of the current instruction being pre-decoded, whether the instruction is of a type having a D or D Short format. In the event this first bit ($a_0$) equals one, then the current instruction has a D type format. In this case, execution proceeds, via path 621, to step 625. Step 625, when performed, extracts the I displacement address field from the current instruction being pre-decoded and appropriately extends the sign of this field an appropriate number of bit positions using address formatting circuit 530 so as to form a properly aligned displacement address. The resulting aligned displacement address is applied, via path 637, to the displacement address input to add step 650.

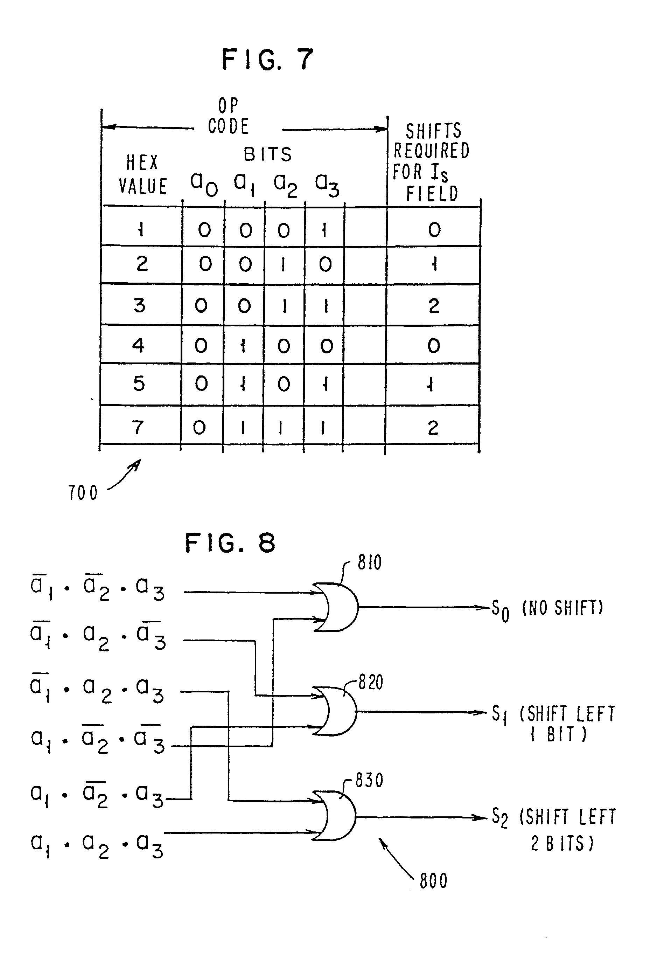

Alternatively, in the event this first bit ($a_0$) of the opcode equals zero, then the current instruction has a D Short type format. In this case, execution proceeds, via path 623, to step 655. Step 655, when performed, extracts the $I_s$ displacement address field from the current instruction being pre-decoded using address formatting circuit 530. However, based upon the specific opcode for the D Short type instruction format, the $I_s$ field may need to be shifted none, one or two bit positions to the left to produce a displacement address having proper bit alignment. The specific relationship between the value of the opcode and the number of required shifts of the $I_s$ address field is set forth in the logical table shown in FIG. 7. Specifically if opcode bits $a_0$, $a_1$, $a_2$ and $a_3$ have the hex values: "1" or "4", then no shifts are required; "2" or "5", then a left shift through one bit position is required; or "3" or "7", then a left shift through two bit positions is required. To quickly determine the amount of shifts required, three control bits, $S_0$, $S_1$ and $S_2$, are fabricated based upon specific logical combinations of opcode bits $a_1$, $a_2$ and $a_3$, and then tested. Illustrative combinatorial logic 800 for fabricating these bits is shown in FIG. 8 wherein OR gates 810, 820 and 830 respectively form control bits $S_0$, $S_1$ and $S_2$ according to the following logical formulas:

$$S_0 = (a_1 \text{ not} * a_2 \text{ not} * a_3) + (a_1 * a_2 \text{ not} * a_3 \text{ not})$$
$$\overline{S_1} = \overline{(a_1 \text{ not} * a_2 * a_3 \text{ not})} + \overline{(a_1 * a_2 \text{ not} * a_3)}$$
$$\overline{S_2} = \overline{(a_1 \text{ not} * a_2 * a_3)} + \overline{(a_1 * a_2 * a_3)}$$

Specifically, after step 655 is performed, decision step 660 is performed to determine if the value of control bit $S_0$ is one. In the event this control bit equals one, then execution proceeds, via the YES path emanating from decision step 660, to step 665. Step 665, when executed, applies the extracted $I_s$ field, with no additional shifts, as the aligned displacement address, via path 637, to the displacement address input to add step 650. Alternatively, in the event that the value of control bit $S_0$ is not one, then execution proceeds, via the NO path emanating from decision step 660, to decision step 670. Decision step 670, when performed, determines if the value of control bit $S_1$ is one. In the event this control bit equals one, then execution proceeds, via the YES path emanating from decision step 670, to step 675. Step 675, when executed, shifts the extracted $I_s$ field by one bit position to the left using address formatting circuit 530 (see FIG. 5) and thereafter, as shown in FIGs. 6A and 6B, applies the resulting shifted $I_s$ field, via path 637, to the displacement address input to add step 650. Alternatively, in the event that the value of control bit $S_1$ is not one, then execution proceeds, via the NO path emanating from decision step 670, to decision step 680. Decision step 680, when performed, determines if the value of control bit $S_2$ is one. In the event this control bit equals one, then execution proceeds, via the YES path emanating from decision step 680, to step 685. Step 685, when executed, shifts the extracted $I_s$ field by two bit positions to the left using address formatting circuit 530 (see FIG. 5) and thereafter, as shown in FIGs. 6A and 6B, applies the resulting shifted $I_s$ field, via path 637, to the displacement address input to add step 650. In the event the value of control bit $S_2$ is not one, then execution proceeds, via the NO path emanating from decision step 680 to step 665 through which the extracted $I_s$ field is applied without any bit shifting as the aligned displacement address to add step 650. Though decision steps 660, 670 and 680 are shown for ease of illustration and understanding as being sequentially executed within method 600, these decision steps would, in fact, preferably be executed in parallel in hardware as specifically shown in FIGs. 9A - 9D.

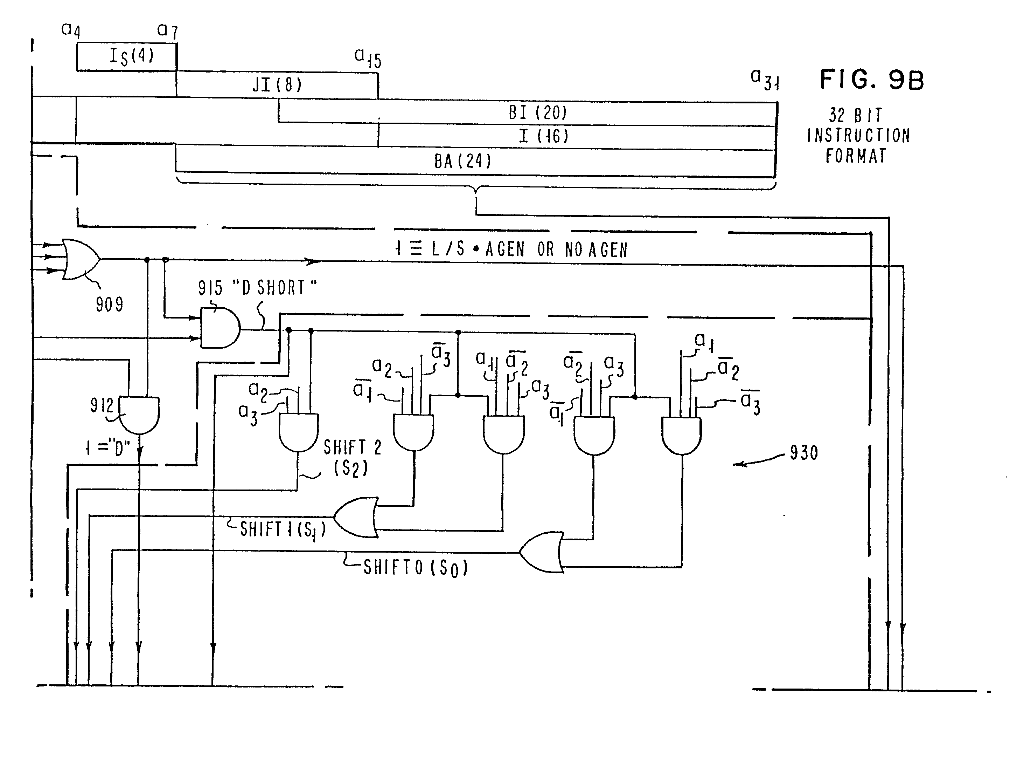

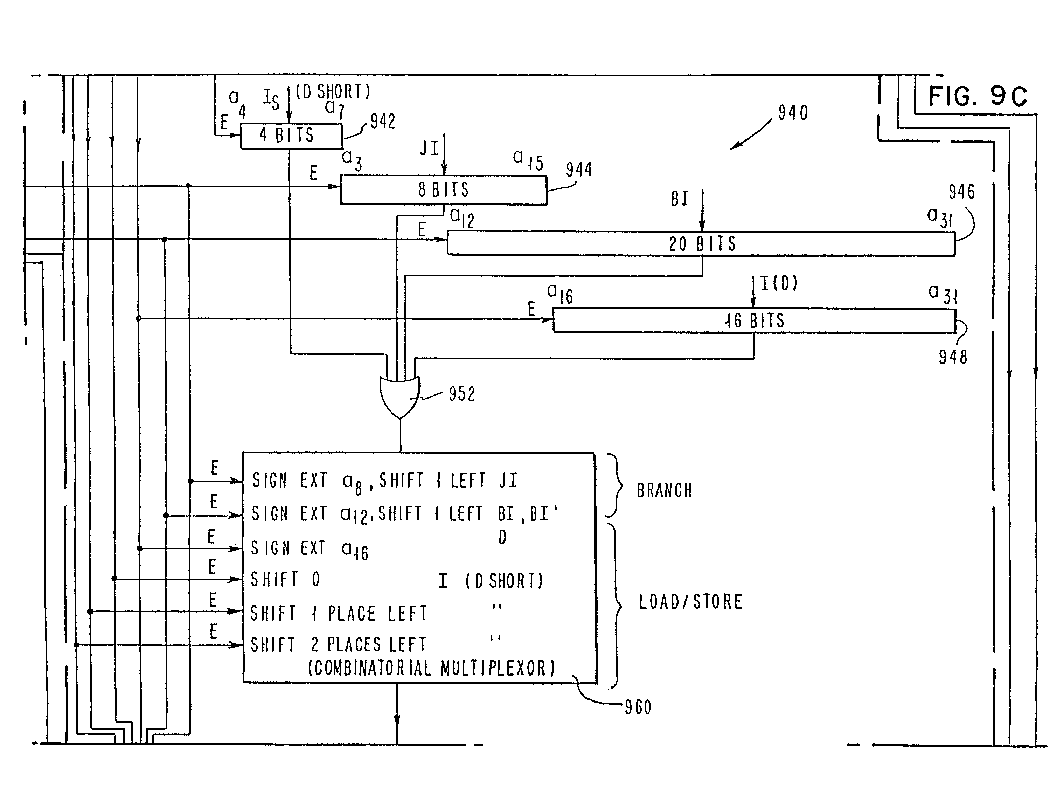

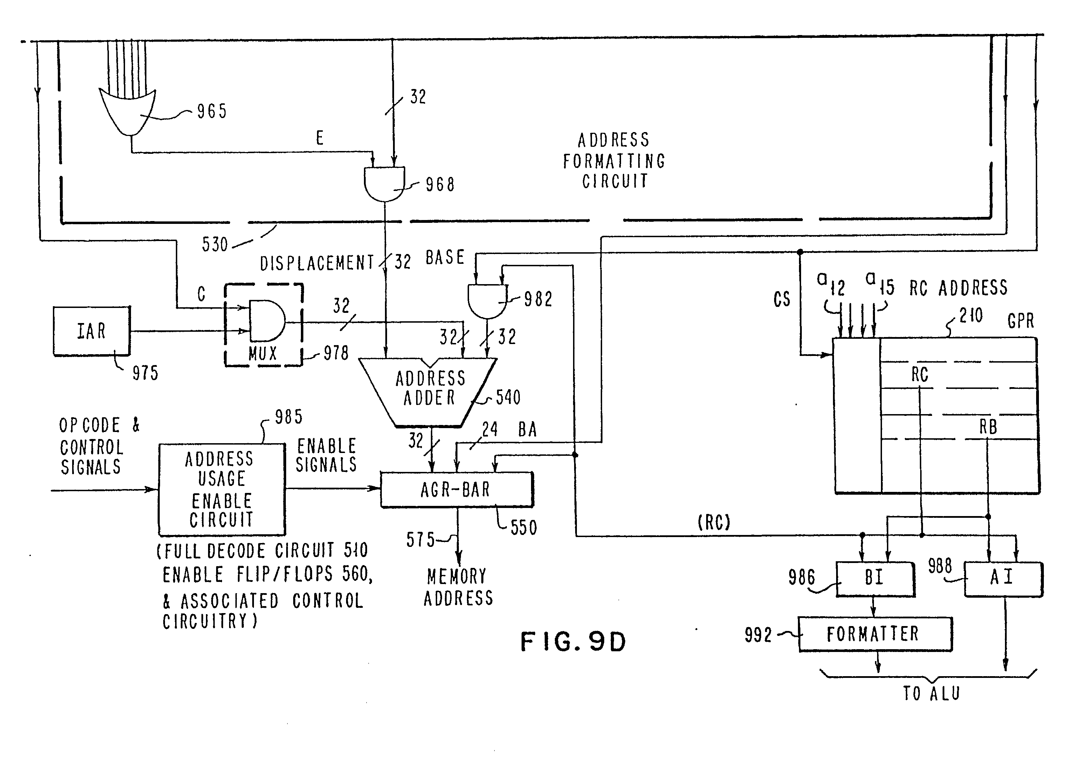

FIGs. 9A - 9D collectively depict a detailed block diagram of the inventive apparatus shown in FIG. 5 that embodies our present invention, and specifically the method shown in FIGs. 6A and 6B, for use in conjunction with processing the illustrative RISC instruction formats shown in FIG. 4. FIG. 9 depicts the correct alignment of the drawing sheets for FIGs. 9A - 9D. For ease of illustration, certain logic gates, e.g. gates 968 and 982, have been shown as single gates operating on multi-bit, e.g. thirty-two bit, data, when, in fact, and as would be readily apparent to those skilled in the art, these gates would be implemented with multiple physical gates.

As shown, instruction pre-decode circuit 520 is formed of logic gates 903, 905, 907, 909, 912 and 915 that in response to the states of instruction opcode bits $a_0$, $a_1$, $a_2$ and $a_3$ and their true complements ($a_0$ not - $a_3$ not) generate various control signals that specify the format of the current instruction. Specifically, gates 903 and 905 produce "one" level signals at their respective outputs if the current instruction has either a BI or BI' format or a JI type format, respectively. Gate 909 produces a "one" level at its output if the current instruction has a format for a load/store that either requires or does not require an address to be generated. Gates 912 and 915 produce "one" levels at their corresponding outputs if the current instruction has either a D or D Short type format.

Address formatting circuit 530 contains gates 930, registers 940, combinatorial multiplexor 960 and gates 965 and 968. Gates 930 collectively produce the above-described control bits $S_0$, $S_1$ and $S_2$. Both these control bits and the outputs of pre-decoding gates 903, 905 and 912 are used as individual enable (E) signals to combinatorial multiplexor 960 to invoke a particular multi-bit sign extension or shift operation. The signals produced by gates 903, 905, 912, and 915 are applied as enable signals to individual registers 942, 944, 946 and 948, which collectively form registers 940. If the format of the current instruction matches that which is pre-decoded by any of these gates, then, in response to an enable signal generated thereby, register 942, 944, 946 or 948 is respectively loaded in parallel with the $I_s$, JI, BI or I field contained within the current instruction. The output of these registers is applied in parallel through OR gate 952 as data input to combinatorial multiplexor 960. Based upon the particular type of the current instruction as specified by a particular one of the several enable signals applied to the combinatorial multiplexor 960, multiplexor 960 undertakes a particular multi-bit sign extension or shift operation and applies the resulting aligned displacement address field to one thirty-two bit input to AND gate 968. Concurrently, the enable signal applied to the combinatorial demultiplexor is also applied as an input to OR gate 965 which, in turn, produces an enable signal as a second input to AND gate 968 to gate the data produced by multiplexor 960 onward to the thirty-two bit displacement address input of address adder 540.

With respect to the base address, this address can arise from one of two sources. As noted above, the base address can be loaded from the instruction address register (IAR), here shown as IAR 975, or from general purpose register RC contained within GPR array 210. The choice as to which register is accessed to yield the base address is governed as described above by whether the current instruction has a format associated with a branch instruction (i.e. is therefore possibly a branch instruction) or a format associated with a load/store instruction (i.e. is therefore possibly a load/store instruction). In the event the current instruction is possibly a branch instruction, then gate 907 will produce a "one" level at its output which, in turn, when applied to a control input of multiplexor 978, illustratively formed of individual AND gates of which only one such gate is shown, gates the address contained in IAR 975 to the base address input of address adder 540. Alternatively, in the event the current instruction is possibly a load/store type instruction, then gate 909, rather than gate 907, will produce a "one" level at its output which, in turn, when applied to a control input of AND gates 982, gates the address contained in general purpose register RC in GPR array 210 to the base address input of address adder 540. The base address and operand contained within general purpose registers RB and RC in GPR array 210 are also applied in parallel to AI register 988, and serially through BI register 986 and formatter 992 to an arithmetic logic unit contained within the RISC processor for subsequent processing thereby. However, this processing is independent of the address produced by adder 540. The thirty-two bit binary output produced by address adder 540 is applied as input to address register 550, which is specifically shown as address generation register - branch address register (AGR-BAR) 550 thereby indicating that this register can contain either a load/store address or a branch address.

Address usage enable circuit 985, which contains full decode circuit 510, enable flip/flops 560 (as specifically shown in FIG. 5) and associated well known control circuitry, generates appropriate enable signals to address register 550. These enable signals indicate, as described above in conjunction with FIG. 5, whether the address loaded into register 550 is to be used, i.e. propagated to memory address output leads 575, as shown in FIGs. 9A - 9D, for use during a subsequent memory access, or is not to be used, in which case this address will be merely overwritten within register 550.

As soon as pre-decoding, specifically gate 909, reveals that the current instruction is possibly a load/store, regardless of whether an address is to be generated or not therefor, the chip select (CS) input to the GPR array is enabled such that the base address can then be immediately accessed from general purpose register RC and, from there, transferred into address adder 540 and the ALU. Four opcode bits $a_{12}$ through $a_{15}$ are illustratively used to select the particular general purpose register that is to be used within GPR array 210 as base address register RC.

By now, those skilled in the art clearly realize that although we have specifically shown and described our inventive technique in conjunction with processing one particular illustrative set of RISC instruction formats, namely that occurring within the IBM PC/RT computer, our invention can be readily utilized in conjunction with processing other sets of RISC instruction formats. In particular, the combinatorial logic for the instruction pre-decoder and the address formatting circuits, including the combinatorial multiplexor, would need to be appropriately changed in order for this logic to process the formats associated with a new set of RISC instructions. These changes, which by now are readily apparent to those skilled in the art, would enable the logic in the pre-decoding circuit to properly recognize the opcodes associated with the formats of the new instructions that initially appear to (i.e. might possibly) require address generation and then to properly parse the displacement address field from each of these instructions, and select and obtain the appropriate base address. Also, through these changes, the address formatting circuit would be able to properly align and, when required, sign extend, the displacement address fields by the appropriate number of bits. Changing the address formatting circuit in this manner assures that all the displacement addresses, regardless of where each resides within a RISC instruction in the new set, will be uniformly applied in proper bit alignment to a common displacement address input of the address adder.

## Claims

1. In a digital computer for processing instructions, apparatus for generating a memory address for a current instruction during a decode cycle of instruction processing having an instruction register means for storing a current instruction for processing, said instruction having an operation code field and an address field instruction decoding means, connected to said

instruction register means and responsive during a decode cycle to the operation code field in the current instruction, for decoding said instruction and for providing a first enable signal in the event said current instruction is one which requires an address to be generated comprising an instruction pre-decoding and address formatting means, connected to said instruction register means and also responsive during the decode cycle to the operation code in the current instruction, for extracting a displacement address from the current instruction and for aligning bits of the displacement address by a pre-defined amount to form an aligned displacement address;

means for adding a base address for the current instruction and the aligned displacement address to form a calculated address; and address register means, responsive to said first enable signal, for applying the calculated address during the decode cycle to an output as a memory address for the current instruction.

2. The apparatus in claim 1 wherein said instruction pre-decoding and address formatting means further comprises means, responsive to said operation code, for providing a selection signal; and said apparatus further comprises means, responsive to said selection signal, for selecting one of a plurality of address sources to provide the base address for the current instruction.

3. The apparatus in claim 2 wherein said base address sources comprise a general purpose register and an instruction address register, and wherein said selecting means comprises means, operative in response to said selection signal, for selecting the general purpose register whenever the current instruction might be a load or store type instruction or the instruction address register whenever the current instruction might be a branch type instruction in order to yield said base address for the current instruction.

4. The apparatus in claim 3 further comprising a general purpose register array comprised of a plurality of registers, wherein the general purpose register is a particular register in said array as specified by a corresponding field in the current instruction.

5. The apparatus in claim 1 wherein said instruction pre-decoding and address formatting means further comprises:
    instruction pre-decoding means, connected to said instruction register means and operative to the operation code during the decode cycle, for generating said selection signal and, based upon a format of the current instruction, second enable signals; and
    address formatting means, responsive to said second enable signals and connected to said instruction register, for extracting the displacement address from the current instruction and for aligning the bits of the displacement address by an amount governed by said second enable signal in order to produce the aligned displacement address.

6. The apparatus in claim 5 wherein said address formatting means comprises means for performing bit shifting and sign extension on the bits of the displacement address.

7. The apparatus in claim 6 wherein said performing means comprises a combinatorial multiplexor.

8. The apparatus in claim 1 wherein said instruction decoding means further comprises:
    means, operative in response to said operation code, for generating a control signal; and
    latch means, having a latched output and responsive to said control signal, for setting the latched output to one state to produce said first enable signal and for resetting the latched output to a second state in response to a reset signal generated during subsequent processing of said current instruction to remove said first enable signal.

9. The apparatus in one cr more of the preceding claims 1 to 8 wherein the current instruction is a reduced instruction set computer (RISC) instruction.

10. In a digital computer as claimed in one or more of the preceding claims 1 to 8 for processing instructions, a method for generating a memory address for a current instruction during a decode cycle of instruction processing comprising the steps of:
    storing a current instruction in an instruction register for processing, said instruction having an operation code field and an address field;
    during a decode cycle and in response to the operation code field in the current instruction, decoding said instruction and providing a first enable signal in the event said current instruction is one which requires an address to be generated;
    during the decode cycle and in response to the operation code in the current instruction, extracting a displacement address from the current instruction and aligning bits of the displacement address by a pre-defined amount to form an aligned displacement address;
    adding a base address for the current instruction and the aligned displacement address to form a calculated address; and
    applying, in response to said first enable signal, the calculated address during the decode cycle to an output as a memory address for the current instruction.

11. The method in claim 10 wherein said extracting and aligning steps further comprise the step of providing, in response to said operation code, a selection signal; and said method further comprises the step of selecting, in response to said selection signal, one of a plurality of address sources to provide the base address for the current instruction.

12. The method in claim 11 wherein said base address sources comprise a general purpose register and an instruction address register, and wherein said selecting step comprises the step of selecting, in response to said selection signal, the general purpose register whenever the current instruction might be a load or store type instruction or the instruction address register whenever the current instruction might be a branch type instruction in order to yield said base address for the current instruction.

13. The method in claim 10 wherein said extract-

14

ing and aligning steps further comprise the steps of:

generating, during the decode cycle and in response to the operation code, said selection signal and, based upon a format of the current instruction, second enable signals; and in response to said second enable signals, extracting the displacement address from the current instruction and aligning the bits of the displacement address by an amount governed by said second enable signal in order to produce the aligned displacement address.

14. The method in claim 13 further comprising the step of performing bit shifting and sign extension on the bits of the displacement address.

15. The method in claim 10 wherein the current instruction is a reduced instruction set computer instruction.

16. The method in claim 10 wherein said decoding and providing steps further comprise the steps of:

generating a control signal in response to said operation code; and

setting, in response to said control signal, an output of a latch to one state so as to produce said first enable signal and for resetting the latched output to a second state in response to a reset signal generated during subsequent processing of said current instruction so as to remove said first enable signal.

17. The method in one or more of the claims 10 to 16 wherein the current instruction is a reduced instruction set computer (RISC) instruction.

# F I G. 1

OP CODE | REG 1 | REG 2 | DISPLACEMENT VALUE

10 →  STORE | R1 | R2 | n

13  15  17  19

INSTRUCTION: STO (R1),(R2)+n   (STORE CONTENTS OF R1
INTO MEMORY AT ADDRESS
SPECIFIED BY CONTENTS
OF R2 + DISPLACEMENT VALUE n)

# F I G. 3B
## PRIOR ART

DATA FROM MEMORY

280

210

GPR

R1

381

BYPASS

385

R1    OPERAND
REGISTER

235

16

FIG. 2
PRIOR ART

# FIG. 3A
## PRIOR ART

INSTRUCTIONS: ① LOAD (R1),(R2)+n (LOAD R1 FROM MEMORY LOCATION
SPECIFIED BY BASE ADDRESS (R2)+ DISPLACEMENT VALUE n)

② ADD (R1),(R3) (ADD (R1) TO (R3) AND PLACE
RESULTS IN ACCUMULATOR)

MACHINE CYCLES

| TIMING: | $T_1$ | $T_2$ | $T_3$ | $T_4$ |
|---|---|---|---|---|
| LOAD INSTRUCTION | DECODE 310 | ADDRESS GENERATION | MEMORY ACCESS 330 | REGISTER LOAD 340 |
| | LOAD R1,R2 IN GPR 320 | ADD (R2) +n | READ MEMORY AT ((R2) +n) | BY-PASS R1 IN GPR |
| ADD INSTRUCTION | | 325 DECODE | 335 DECODE | 345 DECODE |
| | | INHIBIT DECODE (R1 LOCKED) | INHIBIT DECODE (R1 LOCKED) | LOAD R1,R3 INTO GPR SUCCESSFUL DECODE |

WAIT STATE CAUSED BY
ADDRESS GENERATION
(LOST MACHINE CYCLE)

EP 0 440 908 A2

INSTRUCTION FORMAT ⟶

INSTRUCTION TYPE | NON-BRANCH INSTRUCTIONS:

FIG. 4

| FIG. 4A |
| FIG. 4B |

400

FIG. 4A

PRIOR ART

**R** — 401 / 402 / 403

| OP CODE (8) | RB (4) | RC (4) | 405 |

**R'** — 407 / 408 / 409

| OP CODE (8) | RB (4) | I (4) | 410 |

**D SHORT** — 411 / 412 / 413 / 414

| OPCODE (4) | I$_S$ (4) | RB (4) | RC (4) | 415 |

**X** — 416 / 417 / 418 / 419

| OPCODE (4) | RA (4) | RB (4) | RC (4) | 420 |

**D** — 421 / 422 / 423 / 424 / 425

| OPCODE (8) | RB (4) | RC (4) | I (16) |

0      15      31

EP 0 440 908 A2

INSTRUCTION TYPE | ⊢——— INSTRUCTION FORMAT ———→

BRANCH INSTRUCTIONS

R
(UNCONDITIONAL BRANCH)

| OP CODE (8) — 451 | RB (4) — 452 | RC (4) — 453 | — 455 |

R''
(CONDITIONAL BRANCH)

| OP CODE (8) — 457 | N (4) — 458 | RC (4) — 459 | — 460 |

JI
(CONDITIONAL BRANCH)

| OP CODE (4) — 461 | N (4) — 462 | JI (8) — 463 | — 465 |

BI'
(CONDITIONAL BRANCH)

| OP CODE (8) — 467 | N (4) — 468 | BI (20) — 469 | — 470 |

BI
(UNCONDITIONAL BRANCH)

| OP CODE (8) — 471 | RB (4) — 472 | BI (20) — 473 | — 475 |

BA
(UNCONDITIONAL BRANCH)

| OP CODE (8) — 477 | BA (24) — 478 | — 480 |

0        15        31

**FIG. 4B**
PRIOR ART

EP 0 440 908 A2

FIG. 5

EP 0 440 908 A2

FIG. 6

| FIG 6A | FIG 6B |

EP 0 440 908 A2

START

600

INSTRUCTION
PRE-DECODING
OPERATIONS
610

(CURRENT INSTRUCTION IS NOT
A LOAD/STORE, SO ASSUME CURRENT
INSTRUCTION IS A BRANCH
WITH ADDRESS GENERATION )

(CURRENT INSTRUCTION CAN NOT
BE A BRANCH, SO ASSUME
CURRENT INSTRUCTION IS A
LOAD/STORE WITH ADDRESS GENERATION )

605

609    YES

IS FIRST CHARACTER IN
INSTRUCTION = 'O' OF '8' ?

NO

607

IS FIRST BIT OF CHARACTER = O
($a_0 = 0$) ?

610

NO

($a_0 = 1$)

(CURRENT INSTRUCTION IS
BI OR BI' TYPE)

611

613    YES

($a_0 = 0$)

(CURRENT INSTRUCTION
IS JI TYPE)

635

ADDRESS
FORMATTING
OPERATIONS
630

EXTRACT JI ADDRESS FIELD
FROM CURRENT INSTRUCTION USING
ADDRESS FORMATTING CIRCUIT
530 AND ALIGN FIELD

633

EXTRACT BI ADDRESS FIELD
FROM CURRENT INSTRUCTION USING
ADDRESS FORMATTING CIRCUIT
530 AND ALIGN FIELD

DISPLACEMENT    637

645

READ CONTENTS OF INSTRUCTION
ADDRESS REGISTER (IPR)

647

BASE    617

650

ADD BASE ADDRESS AND
DISPLACEMENT TO GENERATE
CURRENT ADDRESS

SELECT REGISTER RC
AS BASE ADDRESS

FIG. 6A

SELECT IAR AS
BASE ADDRESS

ENABLE READ
FROM IAR

ENABLE READ FROM
REGISTER RC

607

LOAD SUM INTO ADDRESS REGISTER    690

FINISH

EP 0 440 908 A2

## FIG. 7

| HEX VALUE | OP CODE BITS $a_0$ | $a_1$ | $a_2$ | $a_3$ | | SHIFTS REQUIRED FOR $I_S$ FIELD |
|---|---|---|---|---|---|---|
| 1 | 0 | 0 | 0 | 1 | | 0 |
| 2 | 0 | 0 | 1 | 0 | | 1 |
| 3 | 0 | 0 | 1 | 1 | | 2 |
| 4 | 0 | 1 | 0 | 0 | | 0 |
| 5 | 0 | 1 | 0 | 1 | | 1 |
| 7 | 0 | 1 | 1 | 1 | | 2 |

700

## FIG. 8

$\overline{a}_1 \cdot \overline{a}_2 \cdot a_3$

$\overline{a}_1 \cdot a_2 \cdot \overline{a}_3$ → 810 → $S_0$ (NO SHIFT)

$\overline{a}_1 \cdot a_2 \cdot a_3$

$a_1 \cdot \overline{a}_2 \cdot \overline{a}_3$ → 820 → $S_1$ (SHIFT LEFT 1 BIT)

$a_1 \cdot \overline{a}_2 \cdot a_3$

$a_1 \cdot a_2 \cdot a_3$ → 830 → $S_2$ (SHIFT LEFT 2 BITS)

800

## FIG. 9A

INSTRUCTION REGISTER

200

$a_0$    $\overline{a}_0$    $a_1$    $\overline{a}_1$    $a_2$    $\overline{a}_2$    $a_3$    $\overline{a}_3$

907

$\overline{a}_1 \cdot \overline{a}_2 \cdot \overline{a}_3 = 1$

$a_3$

$a_1$

$a_2$

1ST CHARA. = "0" OR "8" =

$a_0 = 0_2$

$a_0 = 1$

903    905

$1 = BI/BI'$    $1 = JI$

$1 \equiv$ BRANCH WITH OR WITHOUT ADDRESS GENERATION (AGEN) OR ILLEGAL OPERATION

INSTRUCTION PRE-DECODE CIRCUIT

520

| FIG. 9A | FIG. 9B |
| | FIG. 9C |
| | FIG. 9D |

FIG. 9

FIG. 9B

32 BIT
INSTRUCTION
FORMAT

EP 0 440 908 A2

$a_4$  $I_S$  (D SHORT)

$E_4$   $a_7$   942

4 BITS

JI

940

$a_3$   $a_{15}$   944

E    8 BITS

BI

946

E   $a_{12}$   $a_{31}$

20 BITS

I(D)

$a_{16}$   $a_{31}$

E   16 BITS

948

952

E   SIGN EXT $a_8$, SHIFT 1 LEFT JI    } BRANCH

E   SIGN EXT $a_{12}$, SHIFT 1 LEFT BI, BI'

D

E   SIGN EXT $a_{16}$

E   SHIFT 0          I (D SHORT)

E   SHIFT 1 PLACE LEFT      ''   } LOAD/STORE

E   SHIFT 2 PLACES LEFT     ''

(COMBINATORIAL MULTIPLEXOR)

960

EP 0 440 908 A2

FIG.9D